(19) Europäisches Patentamt
European Patent Office
Office européen des brevets

(11) Veröffentlichungsnummer: **0 284 008 B1**

(12) **EUROPÄISCHE PATENTSCHRIFT**

(45) Veröffentlichungstag der Patentschrift: **27.10.93**

(51) Int. Cl.5: **C09K 19/34**

(21) Anmeldenummer: **88104519.9**

(22) Anmeldetag: **22.03.88**

(54) **Verwendung von 5-Phenyl-Pyrimidinderivaten als Komponenten in smektischen Flüssigkristallmischungen.**

(30) Priorität: **24.03.87 DE 3709549**

(43) Veröffentlichungstag der Anmeldung:
**28.09.88 Patentblatt 88/39**

(45) Bekanntmachung des Hinweises auf die Patenterteilung:
**27.10.93 Patentblatt 93/43**

(84) Benannte Vertragsstaaten:
**AT BE CH DE ES FR GB IT LI NL SE**

(56) Entgegenhaltungen:
**EP-A- 0 199 004**

**CHEMICAL ABSTRACTS, Band 87, Nr. 23, 5. Dezember 1977, Seite 608, Nr. 184456d, Columbus, Ohio, US; Z. HORST et al.: "Synthesis of low-melti ng-point, liquid-crystal heterocycles; III. 2-n-alkylthio-5-(4-substituted-phenyl)pyrimidines"**

**CHEMICAL ABSTRACTS, Band 110, Nr. 8, 20. Februar 1989, Seite 659, Nr. 67361b, Columbus, Ohio, US; I. MUELLER et al.: "New phenyl-pyrimidine derivatives with Sc-phases"**

(73) Patentinhaber: **HOECHST AKTIENGESELL-SCHAFT**

**D-65926 Frankturt(DE)**

(72) Erfinder: **Dübal, Hans-Rolf, Dr.**
**Heuhohlweg 6**
**D-6240 Königstein/Taunus(DE)**
Erfinder: **Escher, Claus, Dr.**
**Amselweg 3**
**D-6109 Mühltal(DE)**
Erfinder: **Hemmerling, Wolfgang, Dr.**
**Billtalstrasse 32**
**D-6231 Sulzbach (Taunus)(DE)**
Erfinder: **Müller, Ingrid, Dr.**
**Am Pfingstbrunnen 1**
**D-6238 Hofheim am Taunus(DE)**
Erfinder: **Ohlendorf, Dieter, Dr.**
**Am Kühlen Grund 4**
**D-6237 Liederbach(DE)**
Erfinder: **Wingen, Rainer, Dr.**
**Rotkäppchenweg 10**
**D-6234 Hattersheim am Main(DE)**

**EP 0 284 008 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**MOL. CRYST. LIO. CRYST., Band 151, 1987, Seiten 225-231, Gordon And Breach Science Publishers S.A.; N.K. SHARMA et al.: "Binary liquid crystal systems with two eutectics"**

## Beschreibung

Flüssigkristalle haben insbesondere im letzten Jahrzehnt Eingang in verschiedenste technische Gebiete gefunden, in denen elektrooptische und Anzeigevorrichtungs-Eigenschaften gefragt sind (z.B. in Uhren-, Taschenrechner- und Schreibmaschinenanzeigen). Diese Anzeigevorrichtungen beruhen auf den dielektrischen Ausrichtungseffekten in den nematischen, cholesterischen und/oder smektischen Phasen der flüssigkristallinen Verbindungen, wobei - verursacht durch die dielektrische Anisotropie - die molekulare Längsachse der Verbindungen eine bevorzugte Ausrichtung in einem angelegten elektrischen Feld einnimmt. Die üblichen Schaltzeiten bei diesen Anzeigevorrichtungen sind für viele andere potentielle Anwendungsgebiete von Flüssigkristallen, die an sich für die Technik wegen ihrer einzigartigen Eigenschaften sehr vielversprechende chemische Verbindungen sind, eher zu lang. Dieser Nachteil macht sich insbesondere dann bemerkbar, wenn eine große Anzahl von Bildpunkten angesteuert werden muß, wodurch die Herstellungskosten von Geräten, die größere Flächen enthalten, z.B. Videogeräte, Oszillographen oder Fernseh-, Radar-, EDV- oder Schreibautomaten-Bildschirme, zu hoch werden.

Neben den nematischen und cholesterischen Flüssigkristallen haben seit einigen wenigen Jahren in zunehmendem Maß auch ferroelektrische smektische Flüssigkristall-Phasen an Bedeutung gewonnen.

Clark und Lagerwall konnten zeigen, daß die Verwendung solcher Flüssigkristallsysteme in sehr dünnen Zellen zu optoelektrischen Schalt- oder Anzeigeelementen führt, die im Vergleich mit den herkömmlichen TN ("twisted nematic")-Zellen um bis zu einem Faktor 1000 schnellere Schaltzeiten haben (vgl. z.B. Lagerwall et al. "Ferroelectric Liquid Crystals for Displays", SID Symposium, October Meeting 1985, San Diego, Ca., USA). Aufgrund dieser und anderer günstiger Eigenschaften, z.B. der bistabilen Schaltmöglichkeit und des nahezu blickwinkelunabhängigen Kontrasts, sind ferroelektrische Flüssigkristalle grundsätzlich für die obengenannten Anwendungsgebiete, z.B. über eine Matrixansteuerung, gut geeignet.

Für die praktische Verwendung von ferroelektrischen Füssigkristallen in elektrooptischen Anzeigen werden nun chirale, geneigte smektische Phasen, z.B. $S_c^*$ -Phasen benötigt (R. B. Meyer, L. Liébert, L. Strzelecki und P. Keller, J. Physique 36, L-69 (1975)), die über einen großen Temperaturbereich stabil sind.

Dieses Ziel kann man erreichen mit Verbindungen, die selbst chirale smektische Phasen, z.B. $S_c^*$ -Phasen, ausbilden oder aber, indem man nicht-chirale, geneigte smektische Phasen ausbildende Verbindungen mit optisch aktiven Verbindungen dotiert (M. Brunet, Cl. Williams, Ann. Phys. 3, 237 (1978)).

Es besteht daher ein Bedarf an Verbindungen, die smektische Phasen ausbilden und mit Hilfe derer Mischungen mit smektischen, insbesondere $S_c$- oder $S_c^*$ -Phasen erhalten werden können.

Ein großer Nachteil der meisten derzeit verfügbaren Materialien mit geneigten smektischen Phasen ist neben dem bezüglich der Temperatur eingeschränkten Phasenbereich eine geringe chemische, thermische oder photochemische Stabilität und eine für die meisten Anwendungen ungünstig große positive dielektrische Anisotropie.

Es wurde nun gefunden, daß Verbindungen der allgemeinen Formel (I)

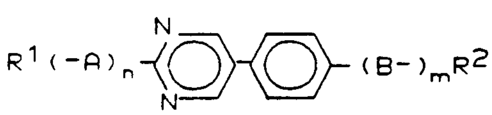

(I)

sich als Komponenten chiraler, geneigter smektischer flüssigkristalliner Phasen besonders gut eignen, wobei die Symbole folgende Bedeutung haben:

$R^1$ und $R^2$ sind gleiche oder verschiedene, geradkettige oder verzweigte Alkyl- oder Alkenyl-Gruppen, die asymmetrische C-Atome enthalten können, 2 bis 16 C-Atome enthalten, und in denen eine oder mehrere nicht benachbarte $-CH_2$-Gruppen durch -O- oder -S- ersetzt sein können;

-A und -B sind Gruppen

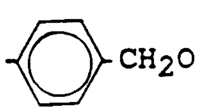 oder 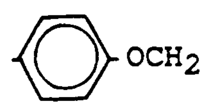

wobei jeweils die Reste $R^1$, $R^2$ am Phenylenteil von -A, -B sitzen und m und n sind 0 oder 1, jedoch ist m + n stets 0 oder 1.

Diese Verbindungen besitzen große chemische, thermische und photochemische Stabilität. Sie weisen außerdem negative oder nur geringfügig positive dielektrische Anisotropie auf (vgl. Beispiele 1 bis 3).

Deshalb werden die dielektrischen Eigenschaften von Mischungen durch Komponenten nach Formel (I) günstig beeinflußt.

Darüber hinaus haben chirale Verbindungen nach Formel (I) auch positiven Einfluß auf die ferroelektrischen Eigenschaften der sie enthaltenden Mischungen, da sie selbst schon über gute ferroelektrische Eigenschaften verfügen (Beispiele 1 und 8).

Besonders bevorzugt sind Verbindungen nach Formel (I) der speziellen Form (II)

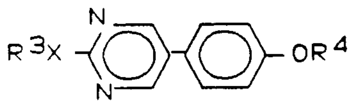

(II)

mit der Bedeutung von X = -O, -S oder Einfachbindung und $R^3$, $R^4$ jeweils gleiche oder verschiedene, geradkettige oder verzweigte Alkyl- oder Alkenyl-Gruppen (wobei Gruppen mit und ohne asymmetrische Kohlenstoffatome eingeschlossen sind) mit 7 bis 14 C-Atomen.

Es wurde nämlich gefunden, daß Verbindungen nach Formel (II) flüssigkristalline $S_c$- bzw. $S_c^*$ -Phasen ausbilden. Sie besitzen zu einem großen Teil sogar temperaturmäßig sehr breite und überwiegend günstig, d.h. bei relativ niedrigen

Temperaturen gelegene $S_c$- bzw. $S_c^*$ -Bereiche. Dieser Befund ist umso überraschender, als nach allgemeinem Kenntnisstand (z.B "Flüssige Kristalle in Tabellen", VEB Deutscher Verlag für Grundstoffindustrie, Leipzig, Band I (1974), Band II (1984) oder H. Zaschke et al., Z. Chem. 17 (1977) 293) das Auftreten von $S_c$- oder $S_c^*$ -Phasen bei Verbindungen nach Formel (I) bzw. (II) nicht zu erwarten war.

Darüber hinaus weisen die Verbindungen nach Formel (II) neben der $S_c$- oder $S_c^*$ -Phase vielfach auch eine $S_A$-Phase auf, was für ihre Anwendung sehr vorteilhaft ist. Verbindungen der Formel (II) sind deshalb bevorzugte Komponenten chiraler, smektischer C-Phasen ($S_c^*$ ).

Bevorzugt sind weiterhin Verbindungen nach Formel (I) mit n = 1 oder m = 1. Diese Verbindungen besitzen zu einem großen Teil $S_c$- oder $S_c^*$ -Phasen und eignen sich als Mischungskomponenten vor allem zur Ausdehnung des $S_c$-oder $S_c^*$ -Bereiches zu höheren Temperaturen bei gleichzeitig vorteilhaftem Einfluß auf das dielektrische Verhalten der Mischung.

Besonders bevorzugt ist die Verwendung von Verbindungen nach Formel (II) in $S_c$- bzw. $S_c^*$ -Mischungen gemeinsam mit Verbindungen des bekannten Typs

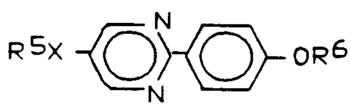

(III)

wobei X = -O oder Einfachbindung und $R^5$, $R^6$ gleiche oder verschiedene Alkylgruppen mit 6 bis 15 C-Atomen.

Es wurde nämlich ganz überraschend gefunden, daß die gemeinsame Verwendung von Verbindungen nach Formel (II) und Formel (III) dazu führen kann, daß sich die $S_c$- oder $S_c^*$ -Phase nicht nur zu tieferen, sondern auch zu höheren Temperaturen hin ausweitet ("induced $S_c$", vgl. Beispiel 3). Dieses Verhalten ist äußerst ungewöhnlich und vorteilhaft für die Anwendung.

Die Herstellung der gemäß dieser Erfindung zu verwendenden Verbindungen ist in der DE-A 37 09 618 beschrieben.

Weiterhin Gegenstand der Erfindung ist ein elektrooptisches Schalt- oder Anzeigeelement, enthaltend eine chirale, geneigte smektische flüssigkristalline Phase, die wieder um Verbindungen der Formel I enthält.

Bevorzugt ist ein solches Anzeige- oder Schaltelement, das in SS FLC-Technik oder AC-Feldstabilisierungstechnik betrieben wird.

Die folgenden Beispiele sollen die Erfindung erläutern.

**Beispiel 1**

(S)-2-Octylthio-5-[4-(6-methyloctyloxy)phenyl]pyrimidin
besitzt die Phasenfolge

$$K \underset{43}{\overset{21}{\rightleftarrows}}$$

$S_c^*$ 55 $S_A$ 60 I und bei 40 °C eine Spontanpolarisation von 1,5 nC/cm$^2$ sowie bei angelegter Rechteckspannung von 10 $V_{eff}$/$\mu$m eine Schaltzeit von 200 $\mu$s. Der Tiltwinkel beträgt bei dieser Temperatur 25° und die dielektrische Anisotropie bei 10 kHz $\Delta\epsilon$ = -0,6.

**Beispiel 2**

(S)-2-Octyloxy-5-[4-(6-methyloctyloxy)phenyl]pyrimidin
besitzt die Phasenfolge

$$K \underset{73}{\overset{53}{\rightleftarrows}}$$

$S_c^*$ 78 $S_A$ 86 I und die Dielektrizitätskonstanten $\epsilon_{\parallel}$ (homöotrope Orientierung) und $\epsilon_{\perp}$ (planare Orientierung) bei 10 kHz und 75 °C:
$\epsilon_{\parallel}$ = 3,5, $\epsilon_{\perp}$ = 3,8 → $\Delta\epsilon$ = -0,3.

**Beispiel 3**

2-Octyloxy-5-(4-Octyloxyphenyl)pyrimidin
besitzt die Phasenfolge

$$K \underset{76}{\overset{55}{\rightleftarrows}}$$

($S_c$ 69) $S_A$ 99 I und die Dielektrizitätskonstanten parallel und senkrecht zum Direktor (10 kHz, 75 °C)
$\epsilon_{\parallel}$ = 3,79, $\epsilon_{\perp}$ = 3,9 → $\Delta\epsilon$ = -0,11.

**Beispiel 4**

Eine Mischung aus
50 % (S)-2-Decylthio-5-[4-(6-methyloctyloxy)phenyl]pyrimidin
50 % (S)-2-Octylthio-5-[4-(6-methyloctyloxy)phenyl]pyrimidin
besitzt folgende Phasenfolge:
K 17 $S_c^*$ 53 $S_A^*$ 58 I

**Beispiel 5**

Eine Mischung aus
30 % 5-Decyl-2-(4-decyloxy-phenyl)-pyrimidin
55 % 5-Octyl-2-(4-octyloxy-phenyl)-pyrimidin
10 % 5-Decyl-2-(4-octyloxy-phenyl)-pyrimidin
5 % 2-Octyloxy-5-[4-(4-decyloxy-phenyl)methyloxy-phenyl]-pyrimidin
ist bis +7 °C unterkühlbar und hat die Phasenfolge
$S_c$ 53 $S_A$ und $S_A$ 71 I

**Beispiel 6**

Eine Mischung aus
(S)-2-Octylthio-5-[4-(6-methyloctyloxy)phenyl]pyrimidin (A) und der literaturbekannten (Flüssige Kristalle in Tabellen, VEB Deutscher Verlag für Grundstoffindustrie, Leipzig, 1974), nicht unter Formel (I) fallenden Verbindung 5-Octyl-2-(4-octyloxy-phenyl)-pyrimidin (B) zeigt nachstehendes Verhalten:

**Beispiel 7**

Eine Mischung aus
80 % (S)-2-Heptylthio-5-[4-(6-methyloctyloxy)phenyl]-pyrimidin
20 % (S)-2-Nonyloxy-5-[4-(6-methyloctyloxy)phenyl]pyrimidin läßt sich bis unter -20 °C unterkühlen und besitzt die Phasenfolge
$S_F$-3 $S_I$ 17 $S_c^*$ 57 $S_A$ 64 I

**Beispiel 8**

Eine Mischung aus
45 % (S)-2-Decylthio-5-[4-(6-methyloctyloxy)phenyl]pyrimidin
45 % (S)-2-Octylthio-5-[4-(6-methyloctyloxy)phenyl]pyrimidin
10 % N-4-(4-Octyloxybenzoyloxy)benzoyl-(S)-prolin-(R)-2-methylpropylester
besitzt im Bereichvon 10 °C bis 42 °C eine $S_c^*$ -Phase und bei 25 °C eine Spontanpolarisation von +30 nC/cm$^2$ sowie eine Schaltzeit im SSFLC-Display von 45 µs bei 10 $V_{eff}$/µmangelegter Rechteckspannung.

**Beispiel 9**

Eine Mischung aus
40 % (S)-2-Decylthio-5-[4-(6-methyloctyloxy)phenyl]-pyrimidin
40 % (S)-2-Octylthio-5-[4-(6-methyloctyloxy)phenyl]-pyrimidin
2 % 5-Undecyl-2-(4-decyloxyphenyl)-pyrimidin
2 % 5-Decyl-2-(4-octyloxy-phenyl)-pyrimidin
5,5 % 5-Decyl-2-(4-decyloxy-phenyl)-pyrimidin
10,5 % 5-Octyl-2-(4-octyloxy-phenyl)-pyrimidin
hat einen Schmelzpunkt von 5 °C und besitzt die Phasenfolge
$S_I^*$ 18 $S_c^*$ 58 $S_A$ 62 I
Das höchst überraschende und außerordentlich vorteilhafte Verhalten beim Mischen der beiden obengenannten Substanzen geht aus dem binären Phasendiagramm (Aufheizkurven) in der Fig. hervor: Die $S_c^*$ -Phase wird nicht nur zu tiefen, sondern auch zu hohen Temperaturen hin ausgeweitet. Dieses letztere Verhalten ist bisher nicht beschrieben worden.

**Beispiel 10**

Eine Mischung aus
1,3 % (S)-2-(4-Decyloxy-benzyloxy)-5-[4-(6-methyloctyloxy)-pheny]-pyrimidin
39,5 % (R,S)-4-Decyloxybenzoesäure-[4-(4-methylhexyloxy)-phenyl]-ester
32,6 % 5-Octyl-2-(4-octyloxy-phenyl)-pyrimidin
16 % 5-Decyl-2-(4-decyloxy-phenyl)-pyrimidin
10,6 % 5-Decyl-2-(4-octyloxy-phenyl)-pyrimidin
besitzt die Phasenfolge
K 3 $S_c^*$ 62 $S_A$ 68 N* 69 I

## Patentansprüche

1. Verwendung von Verbindung der allgemeinen Formel (I)

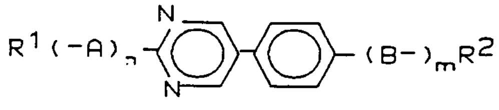

(I)

in der die Symbole folgende Bedeutung haben:
$R^1$ und $R^2$ sind gleiche oder verschiedene, geradkettige oder verzweigte Alkyl- oder Alkenylgruppen, die asymmetrische C-Atome enthalten können, 2 bis 16 C-Atome enthalten, und in denen eine oder mehrere nicht benachbarte $-CH_2$-Gruppen durch -O- oder -S- ersetzt sein können;
-A und -B sind Gruppen

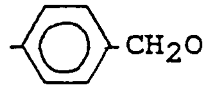 oder 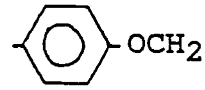

wobei jeweils die Reste $R^1$, $R^2$ am Phenylenteil von -A, -B sitzen;
und m und n sind 0 oder 1, jedoch ist m + n stets 0 oder 1;
als Komponenten chiraler, geneigter smektischer flüssigkristalliner Phasen.

**2.** Verwendung nach Anspruch 1, dadurch gekennzeichnet, daß Verbindungen der Formel (II)

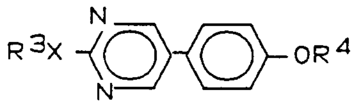

(II)

verwendet werden, worin X eine Einfachbindung, -O oder -S bedeutet, und $R^3$ und $R^4$ gleiche oder verschiedene, geradkettige oder verzweigte Alkyl- oder Alkenyl-Gruppen mit 7 bis 14 C-Atomen sind, die asymmetrische C-Atome enthalten können.

**3.** Verwendung von Verbindungen nach Anspruch 1 oder 2, als Komponenten chiraler, smektischer C-Phasen ($S_c^*$ ).

**4.** Verwendung von Verbindungen nach Anspruch 2, in $S_c$- oder $S_c^*$ -Phasen in Kombination mit Verbindungen der Formel (III)

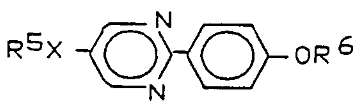

(III),

in der X eine Einfachbindung oder -O bedeutet, und $R^5$ und $R^6$ gleiche oder verschiedene Alkylgruppen mit 6 bis 15 C-Atomen sind.

**5.** Elektrooptisches Schalt- oder Anzeigeelement enthaltend eine flüssigkristalline Phase nach einem der Ansprüche 1 bis 4.

**6.** Ausführungsform nach Anspruch 5, bei der das Anzeige- oder Schaltelement in SSFLC-Technik oder AC-Feldstabilisierungstechnik betrieben wird.

**Claims**

**1.** Use of a compound of the formula (I)

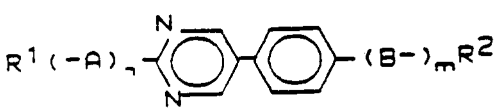

(I)

in which the symbols have the following meaning:
$R^1$ and $R^2$ denote identical or different, straight-chain or branched alkyl or alkenyl groups which can contain asymmetric carbon atoms, contain 2 to 16 carbon atoms, and in which one or more non-adjacent $-CH_2-$ groups can be replaced by -O- and/or -S-,
-A and -B each denote groups

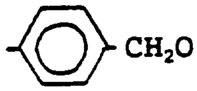 or 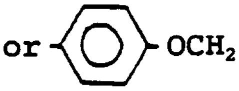

in which the radicals $R^1$, $R^2$, in each case, are situated at the phenylene part of -A, -B and m and n denote 0 or 1, but m + n is always 0 or 1 as components of chiral, smectic tilted liquid-crystalline phases.

**2.** Use as claimed in claim 1, wherein compounds of the formula (II)

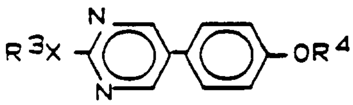 (II)

are used in which X denotes a single bond, -O or -S, and $R^3$ and $R^4$ denote identical or different, straight-chain or branched alkyl or alkenyl groups having 7 to 14 carbon atoms which can contain asymmetric carbon atoms.

**3.** Use of compounds as claimed in claim 1 or 2, as components of chiral, smectic C phases ($S_c^*$ ).

**4.** Use of the compounds as claimed in claim 2, in $S_c$ or $S_c^*$ phases in combination with compounds of the formula (III)

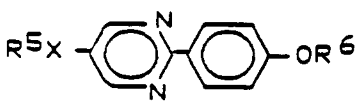 (III)

in which X denotes a single bond or -O, and $R^5$ and $R^6$ are identical or different alkyl groups having 6 to 15 carbon atoms.

**5.** An electrooptical switching or display element containing a liquid-crystalline phase as in one of claims 1 to 4.

**6.** An embodiment as claimed in claim 5, wherein the display or switching element is operated using SSFLC technology or AC field stabilization technology.

**Revendications**

**1.** Utilisation de composés de formule générale (I)

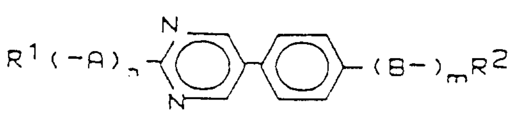 (I)

[dans laquelle les symboles ont le sens suivant :

$R^1$ et $R^2$ représentent des groupes alkyles ou alcényles, identiques ou différents, linéaires ou ramifiés, qui peuvent contenir des atomes de C asymétriques, et qui contiennent 2 à 16 atomes de carbone, et dans lesquels un ou plusieurs groupes $-CH_2-$ non adjacents peuvent être remplacés par -O- ou par -S-;

-A et -B représentent des groupes

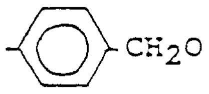 ou 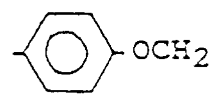

chacun des restes $R^1$ et $R^2$ étant fixés sur la partie phénylène du groupe -A et -B;

et m et n valent 0 ou 1, mais la somme (m + n) vaut toujours 0 ou 1];

comme constituants de phases chirales à propriétés de cristaux liquides inclinés.

**2.** Utilisation selon la revendication 1, caractérisée en ce qu'on utilise des composés de formule (II)

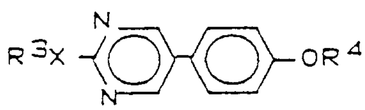 (II)

dans laquelle X est une liaison simple ou représente -O- ou -S-, et $R^3$ et $R^4$ représentent des groupes alkyles ou alcényles, identiques ou différents, linéaires ou ramifiés, ayant 7 à 14 atomes de C, et peuvent contenir des atomes de C asymétriques.

**3.** Utilisation de composés selon la revendication 1 ou 2, à titre de constituants de phase C smectique chirale ($S_c^*$ ).

**4.** Utilisation de composés selon la revendication 2, en phases $S_c$ et ou $S_c^*$ , en combinaison avec des composés de formule (III)

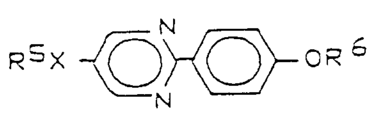 (III),

dans laquelle X représente une liaison simple ou -O, et $R^5$ et $R^6$ représentent des groupes alkyles, identiques ou différents, ayant 6 à 15 atomes de carbone.

**5.** Eléments de commutation ou d'affichage électro-optiques contenant une phase à propriétés de cristaux liquides selon une des revendications 1 à 4.

**6.** Forme de réalisation selon la revendication 5, dans laquelle l'élément d'affichage ou de commutation fonctionne en technique de "SSFLC" ou dans la technique de stabilisation de champ en courant alternatif.

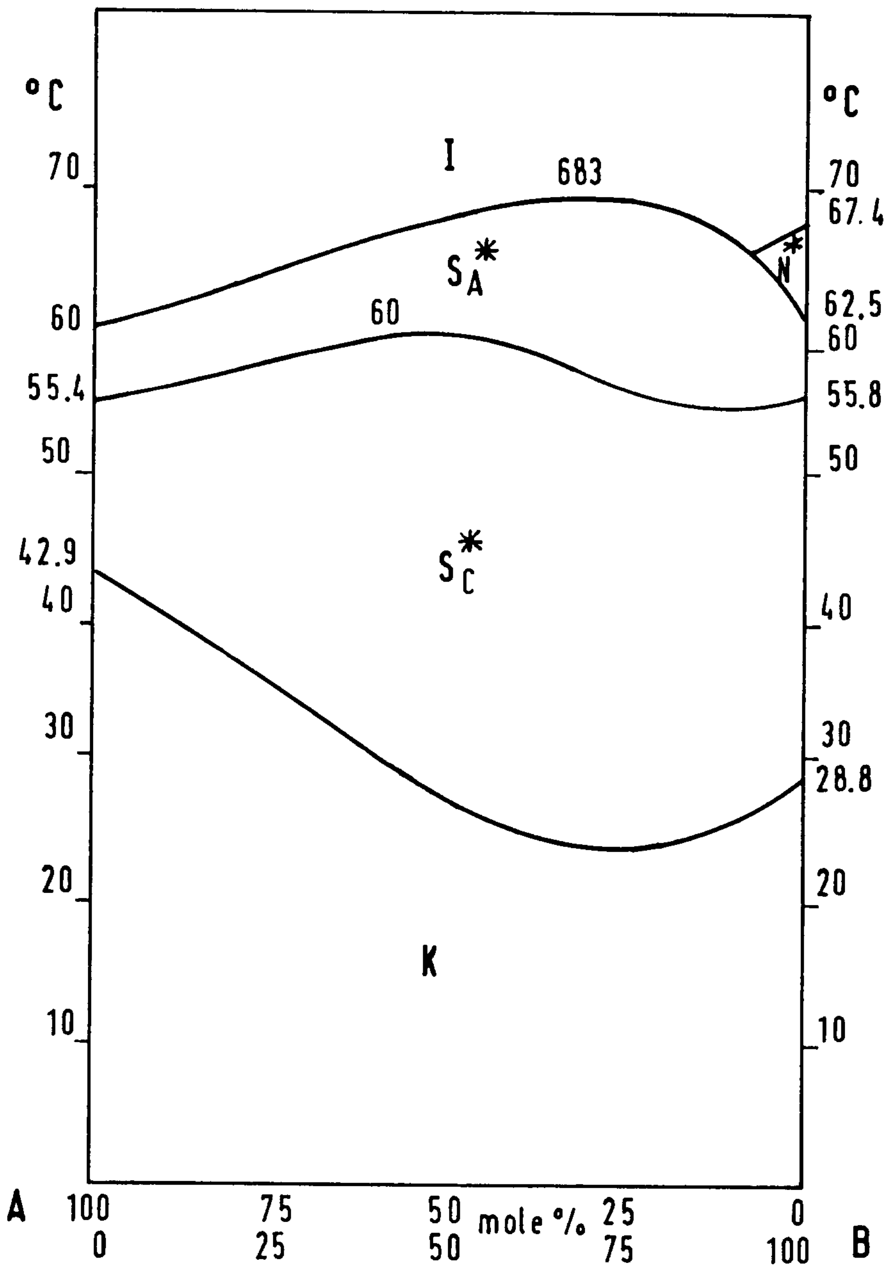
°C
°C
I
683
70
70
67.4
$S_A^*$
$N^*$
60
60
62.5
60
55.4
55.8
50
50
42.9
$S_C^*$
40
40
30
30
28.8
20
20
K
10
10
A
100
75
50
mole %
25
0
0
25
50
75
100
B